# EUROPÄISCHE PATENTSCHRIFT

(11) **EP 1 476 666 B1**
(45) Veröffentlichungstag und Bekanntmachung des Hinweises auf die Patenterteilung: **28.06.2006**
(21) Anmeldenummer: 03704316.3
(22) Anmeldetag: 17.02.2003
(51) Int. Cl.: F16B 7/06, F16C 11/04

(54) **GABELKOPF FÜR EINEN ZUGANKER**
FORK HEAD FOR A TENSION ROD
CHAPE POUR TIRANT D'ANCRAGE

(30) Priorität: 21.02.2002 DE 20202702 U
(43) Veröffentlichungstag der Anmeldung: 17.11.2004
(73) Patentinhaber: Anker-Schroeder.de Asdo GmbH, 44143 Dortmund (DE)
(72) Erfinder: SCHROEDER, Dirk, 44141 Dortmund (DE); HAGEMANM, Axel, 44579 Castrop-Rauxel (DE)
(74) Vertreter: Ksoll, Peter
(86) Internationale Anmeldenummer: PCT/DE2003/000473
(87) Internationale Veröffentlichungsnummer: WO 2003/072961

(56) Entgegenhaltungen:
- DE-A- 3 243 238
- DE-U- 29 711 950

## Beschreibung

Die Erfindung betrifft einen Gabelkopf zum Anschluss eines stangen- oder seilartigen Zugelements gemäß den Merkmalen im Oberbegriff von Patentanspruch 1.

Stangen- oder seilartige Zugelemente, beispielsweise Zuganker, kommen im konstruktiven Ingenieurbau, Brückenbau, Stahlhochbau, Hallenbau und ähnlichen industriellen Bereichen in unterschiedlichsten Ausführungsformen zum Einsatz. Es handelt sich um Bauteile, die aufgrund ihrer Zugfestigkeit verschiedene Bauteile miteinander verbinden bzw. verspannen. Beispiele hierfür sind senkrechte und diagonale Hänger für Brücken und Hochbauten oder Abspannungen von sogenannten Windverbänden.

Zugelemente unterliegen im Einsatz hohen äußeren Kräften. Insbesondere die Anschlussbereiche der Zugelemente sind hierbei starken Belastungen ausgesetzt. Eine übliche Anschlussart erfolgt über endseitig an den Zugelementen festegelegte Gabelköpfe. Ein solcher Gabelkopf für einen Zuganker geht beispielsweise aus der DE 39 34 531 C1 oder der DE 87 07 293 U1 hervor. Der Gabelkopf umfasst einen mit einem Innengewinde versehenen Widerlagerabschnitt mit zwei Seitenlaschen. Die Seitenlaschen sind von zueinander fluchtenden Querbohrungen zur Aufnahme eines Gelenkbolzens durchsetzt. Über den Gabelkopf kann der Zuganker an ein Anschlussteil, beispielsweise ein Anschlussblech oder eine Verbindungslasche, gekoppelt und mittels des Gelenkbolzens lagegesichert werden. Der Gelenkbolzen selbst wird durch beidseitig angeordnete Sprengringe fixiert. Der Übergang von den Stirnflächen der Seitenlaschen zu deren Außenflächen ist schulterartig und relativ eckig gestaltet.

Durch die DE 297 11 950 U1 ist ein Zugstab-Anker für Tragwerkskonstruktionen bekannt mit einem Gabelkopf wie zuvor beschrieben, wobei die dem Widerlagerabschnitt abgewandten Stirnseiten der Laschen kugelabschnittsförmig gekrümmt sind.

Hinsichtlich des Spannungsverlaufs unter Last bringen die bekannten Gabelköpfe nicht die besten Eigenschaften mit sich. Es hat sich gezeigt, dass der Spannungsverlauf in den Gabelköpfen ungleichmäßig ist. So treten Spannungsspitzen auf, insbesondere in den Außenbereichen der Seitenlaschen ebenso wie im Anschlussbereich am Innengewinde. Auch vom Gewicht her erscheinen die bekannten Gabelköpfe verbesserungswürdig.

Der Erfindung liegt daher ausgehend vom Stand der Technik nach der DE 29 711 950 U1 die Aufgabe zugrunde, einen sowohl anwendungstechnisch als auch hinsichtlich des Spannungsverlaufs verbesserten und gewichtsmäßig reduzierten Gabelkopf zu schaffen.

Die Lösung dieser Aufgabe besteht nach der Erfindung in einem Gabelkopf gemäß den Merkmalen von Patentanspruch 1.

Kernpunkt der Erfindung bildet die Maßnahme, in den Außenflächen der Laschen längsgerichtete konkav gekrümmte Außenmulden vorzusehen, welche sich vom Widerlagerabschnitt ausgehend in Richtung zu den Querbohrungen hin verbreitern und vertiefen sowie dass die Querbohrungen in stirnseitige kranzartige Vertiefungen der Laschen zur Aufnahme von Abschlussscheiben münden.

Die Kontur trägt dem Spannungsverlauf im Gabelkopf unter Last Rechnung und ermöglicht gleichzeitig den Gabelkopf insgesamt im Gewicht zu reduzieren. Spannungsspitzen oder Sprünge werden minimiert. Auch vom optischen Design her hebt sich der erfindungsgemäße Gabelkopf von den bekannten Vorschlägen ab. Der Anschlag eines mit einem erfindungsgemäßen Gabelkopf versehenen Zugankers an einem Anschlussblech oder einer Verbindungslasche erfolgt in bekannter Weise mittels eines Bolzens. Über die in die Vertiefungen eingelegten Abschlussscheiben wird der Bolzen gesichert.

Der erfindungsgemäße Gabelkopf ist geeignet für stangenartige Zugelemente, also Zuganker. Zur Festlegung im Gabelkopf besitzen Zuganker einen mit einem Außengewinde versehenen Endabschnitt. Im Widerlagerabschnitt ist ein entsprechendes Innengewinde vorgesehen, so dass der Gabelkopf auf den Endabschnitt des Zugankers geschraubt und festgelegt werden kann.

Auch für seilartige Zugelemente ist der Gabelkopf vorteilhaft. Zur Festlegung wird das Ende eines Seils im Widerlagerabschnitt verklemmt oder verpresst und gegebenenfalls vergossen.

Nach den Merkmalen von Patentanspruch 2 schließen die Abschlussscheiben mit der Außenkontur einer Lasche bündig ab. Hier sind sie durch ein Sicherungselement fixierbar (Patentanspruch 3).

In der Ausgestaltung nach Patentanspruch 4 sind die Sicherungselemente durch Senkkopfschrauben gebildet, die in stirnseitige Gewindebohrungen des Bolzens eingedreht sind. Auf diese Weise ist eine montagefreundliche und zuverlässige Lagesicherung des Bolzens im Gabelkopf und damit des Anschlusses eines Zugelements gewährleistet.

Wie bereits erwähnt, ist der erfindungsgemäße Gabelkopf insbesondere für Zuganker geeignet. Dementsprechend ist nach den Merkmalen von Patentanspruch 5 vorgesehen, dass im Widerlagerabschnitt ein Innengewinde zur Aufnahme eines mit einem Außengewinde versehenen Endabschnitts eines Zugelements ausgebildet ist.

Der Einführschlitz weist bodenseitig zum Innengewinde der Gewindehülse hin geneigte Schrägflächen auf. Diese Maßnahme sichert eine technisch einfache und zuverlässige Kontrolle der Einschraubtiefe des Zugankers. Der Gabelkopf wird so weit auf einen Zuganker geschraubt, bis die kopfseitige Stirnfläche des Zugankers visuell zu erkennen ist. Damit ist gesichert, dass die notwendige Einschraublänge als Kraft übertragender Abschnitt eingehalten wird.

Gemäß den Merkmalen von Patentanspruch 6 sind auch auf den Innenseiten der Laschen Innenmulden vorgesehen. In dieser Ausgestaltung kann das Gewicht des Gabelkopfs durch ein belastungsorientiertes Design weiter reduziert werden.

Die Erfindung ist nachfolgend anhand eines in den Zeichnungen dargestellten Ausführungsbeispiels näher beschrieben. Es zeigen:
- Figur 1: einen erfindungsgemäßen Gabelkopf in perspektivischer Darstellungsweise;
- Figur 2: eine Seitenansicht auf den Gabelkopf gemäß der Figur 1;
- Figur 3: einen Vertikalschnitt durch den Gabelkopf gemäß der Figur 2 entlang der Linie A-A;
- Figur 4: eine dreidimensionale Darstellung der Montagesituation eines Gabelkopfs;
- Figur 5: ebenfalls in dreidimensionaler Darstellungsweise teilweise geschnitten einen an einem Zuganker montierten Gabelkopf und
- Figur 6: den Gabelkopf an einem Anschlussteil montiert.

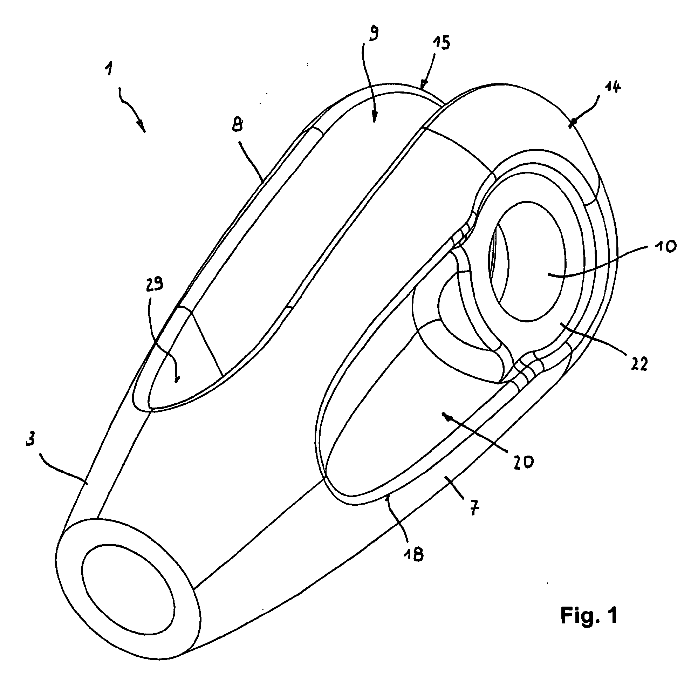

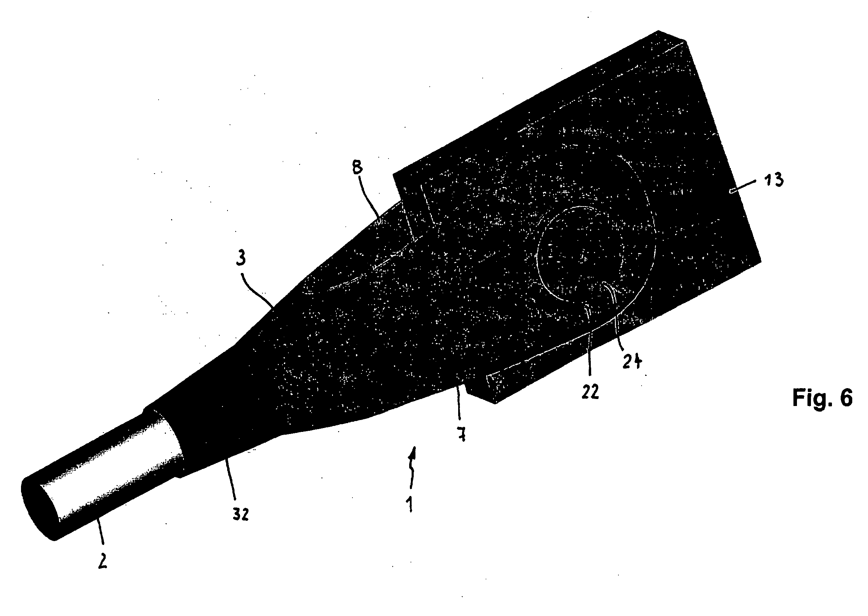

Die Figuren 1 bis 6 zeigen einen erfindungsgemäßen Gabelkopf 1 für einen Zuganker 2. Der Gabelkopf 1 weist einen Widerlagerabschnitt 3 in Form einer Gewindehülse mit einem Innengewinde 4 auf. Mit dem Widerlagerabschnitt 3 wird der Gabelkopf 1 auf den mit einem Außengewinde 5 versehenen Endabschnitt 6 des Zugankers 2 aufgeschraubt.

In Fortsetzung des Widerlagerabschnitts 3 sind zwei zueinander parallele Laschen 7, 8 vorgesehen, die zwischen sich einen Einführschlitz 9 ausbilden. Jede Lasche 7, 8 wird von einer Querbohrung 10 bzw. 11 durchsetzt. Die beiden Querbohrungen 10, 11 sind zueinander fluchtend angeordnet und dienen zur Aufnahme eines Gelenkbolzens 12, über den der Zuganker 2 mit dem montierten Gabelkopf 1 an einem Anschlussteil 13 festgelegt werden kann.

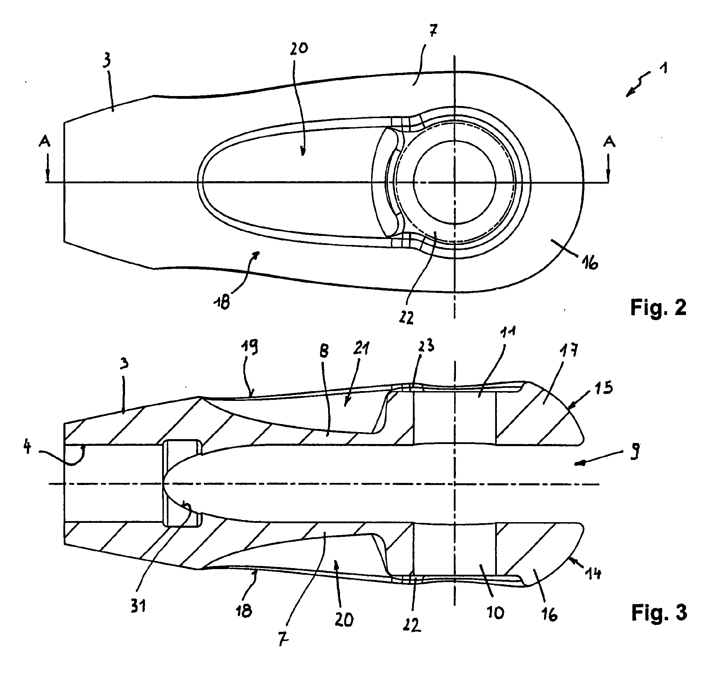

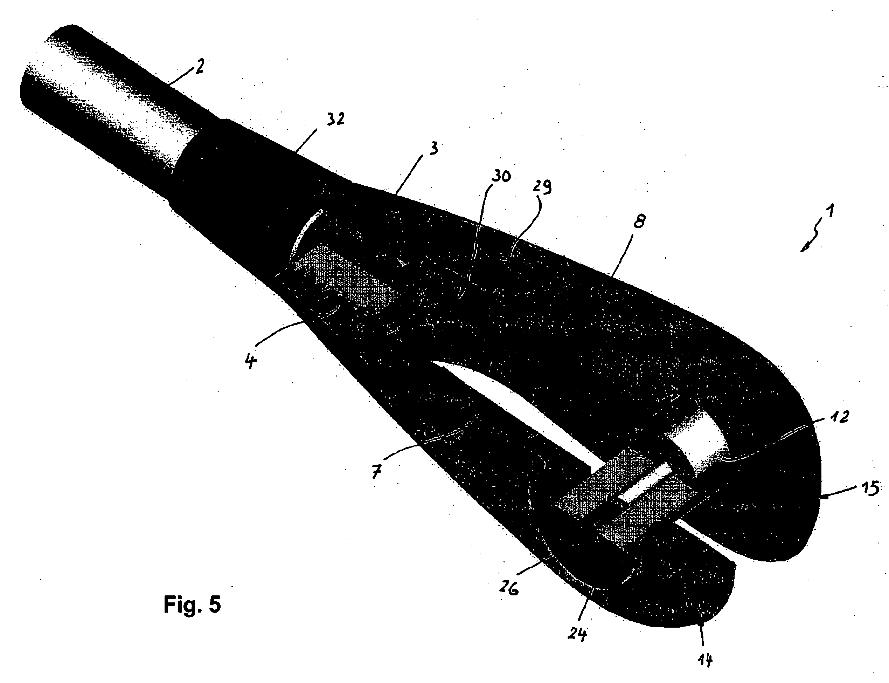

Insbesondere anhand der Figuren 3 und 5 wird deutlich, dass die dem Widerlagerabschnitt 3 abgewandten Stirnflächen 14, 15 der Laschen 7, 8 kugelabschnittsförmig gekrümmt sind. Die unter Schubspannung besonders hoch belasteten Endabschnitte 16, 17 der Laschen 7, 8 erfahren so eine gezielte materialmäßige Verstärkung, die jedoch für den Spannungsverlauf günstig ist. Eine solche kugelabschnittsförmige Krümmung vermeidet Lastsprünge und Spannungsspitzen in den Laschen 7 bzw. 8.

Jeweils in den Außenflächen 18, 19 der Laschen 7 bzw. 8 ist jeweils eine längsgerichtete konkav gekrümmte Außenmulde 20, 21 vorgesehen. Die Außenmulden 20, 21 verbreitern und vertiefen sich vom Widerlagerabschnitt 3 ausgehend in Richtung zu den Querbohrungen 10, 11. Die Ausgestaltung der Außenmulden 20, 21 wirkt sich positiv auf den Spannungsverlauf unter Belastung des Gabelkopfs 1 aus und stellt eine gezielte Gewichtsersparnis in ansonsten überdimensionierten Bereichen sicher.

Die Querbohrungen 10, 11 münden in stirnseitig kranzartige Vertiefungen 22, 23 der Laschen 7 bzw. 8. Die Vertiefungen 22, 23 dienen zur Aufnahme von Abschlussscheiben 24, 25. Die Abschlussscheiben 24, 25 sind durch ein Sicherungselement 26, 27 in Form einer Senkkopfschraube festgelegt. Hierzu werden die Senkkopfschrauben in stirnseitige Gewindebohrungen 28 des Bolzens 12 eingedreht.

Man erkennt ferner, insbesondere anhand der Figur 5, dass auf den Innenseiten 29 der Laschen 7, 8 vom Innengewinde 4 ausgehende kurze Innenmulden 30 vorgesehen sind.

Der Einführschlitz 9 weist bodenseitig zwischen den beiden Laschen 7, 8 zum Innengewinde 4 des Widerlagerabschnitts 3 hin geneigte Schrägflächen 31 auf. Die Schrägflächen 31 sind leicht gekrümmt gestaltet, was sich ebenfalls positiv auf den Spannungsverlauf auswirkt. Die Schrägflächen 31 ermöglichen zudem eine visuelle, gegebenenfalls auch manuelle Kontrolle der Einschraubtiefe eines Zugankers 2.

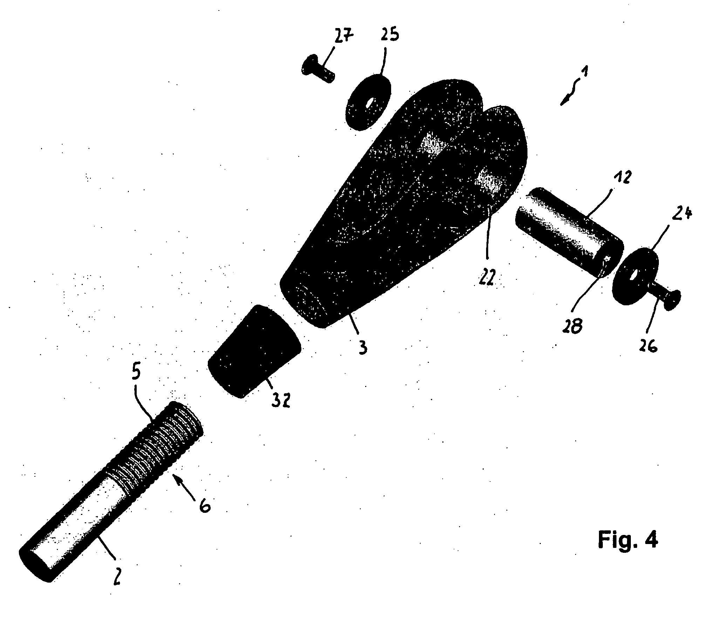

Wie die Figuren 4 bis 6 weiterhin verdeutlichen, ist zum Schutz des nicht vom Widerlagerabschnitt 3 abgedeckten Teils des Außengewindes 5 auf dem Endabschnitt 6 noch eine Gewindeabdeckhülse 32 vorgesehen. Diese wird vor der Montage des Gabelkopfs 1 auf den Endabschnitt 6 gedreht. Nachdem der Gabelkopf 1 montiert ist, wird die Gewindeabschlusshülse 32 gegen die Stirnseite 33 des Widerlagerabschnitts 3 festgezogen.

### Bezugszeichenaufstellung

- 1 -: Gabelkopf
- 2 -: Zuganker
- 3 -: Widerlagerabschnitt
- 4 -: Innengewinde
- 5 -: Außengewinde
- 6 -: Endabschnitt
- 7 -: Lasche
- 8 -: Lasche
- 9 -: Einführschlitz
- 10 -: Querbohrung
- 11 -: Querbohrung
- 12 -: Gelenkbolzen
- 13 -: Anschlussteil
- 14 -: Stirnfläche v. 4
- 15 -: Stirnfläche v. 5
- 16 -: Endabschnitt
- 17 -: Endabschnitt
- 18 -: Außenfläche v. 7
- 19 -: Außenfläche v. 8
- 20 -: Außenmulde
- 21 -: Außenmulde
- 22 -: Vertiefung
- 23 -: Vertiefung
- 24 -: Abschlussscheibe
- 25 -: Abschlussscheibe
- 26 -: Sicherungselement
- 27 -: Sicherungselement
- 28 -: Gewindebohrung
- 29 -: Innenseite von 7, 8
- 30 -: Innenmulde
- 31 -: Schrägfläche
- 32 -: Gewindeabdeckhülse
- 33 -: Stirnseite von 3

## Patentansprüche

1. Gabelkopf, welcher einen Widerlagerabschnitt (3) zum Anschluss eines stangen- oder seilartigen Zugelements (2) aufweist, wobei in Fortsetzung des Widerlagerabschnitts (3) zwei parallele Laschen (7, 8) vorgesehen sind, zwischen denen ein Einführschlitz (9) ausgebildet ist, und die Laschen (7, 8) von fluchtenden Querbohrungen (10, 11) zur Aufnahme eines Bolzens (12) durchsetzt sind, wobei die dem Widerlagerabschnitt (3) abgewandten Stirnflächen (14, 15) der Laschen (7, 8) kugelabschnittsförmig gekrümmt sind, **dadurch gekennzeichnet, dass** in den Außenflächen (18, 19) der Laschen (7, 8) längsgerichtete konkav gekrümmte Außenmulden (20, 21) vorgesehen sind, welche sich vom Widerlagerabschnitt (3) ausgehend in Richtung zu den Querbohrungen (10, 11) hin verbreitern und vertiefen, und dass die Querbohrungen (10, 11) in stirnseitige kranzartige Vertiefungen (22, 23) der Laschen (7, 8) zur Aufnahme von Abschlussscheiben (24, 25) münden.

2. Gabelkopf nach Anspruch 1, **dadurch gekennzeichnet, dass** die Abschlussscheiben (24, 25) mit der Außenkontur einer Lasche (7, 8) bundig abschließen.

3. Gabelkopf nach Anspruch 1 oder 2, **dadurch gekennzeichnet, dass** die Abschlussscheiben (24, 25) durch ein Sicherungselement (26, 27) fixierbar sind.

4. Gabelkopf nach Anspruch 3, **dadurch gekennzeichnet, dass** die Sicherungselemente (26, 27) durch Senkkopfschrauben gebildet und in stirnseitige Gewindebohrungen (28) des Bolzens (12) eingedreht sind.

5. Gabelkopf nach einem der Ansprüche 1 bis 4, **dadurch gekennzeichnet, dass** im Widerlagerabschnitt (3) ein Innengewinde (4) zur Aufnahme eines mit einem Außengewinde (5) versehenen Endabschnittes (6) eines Zugelements (2) ausgebildet ist.

6. Gabelkopf nach einem der Ansprüche 1 bis 5, **dadurch gekennzeichnet, dass** auf den Innenseiten (29) der Laschen (7, 8) Innenmulden (30) vorgesehen sind.

## Claims

1. Fork head which has an abutment section (3) for the connection of a rod- or cable-like tension element (2), with two parallel tabs (7, 8) being provided as an extension of the abutment section (3), between which tabs an insertion slot (9) is formed, and the tabs (7, 8) being penetrated by aligned transverse holes (10, 11) for receiving a bolt (12), with those end surfaces (14, 15) of the tabs (7, 8) which face away from the abutment section (3) being curved in the shape of a segment of a sphere, **characterized in that** the longitudinally directed, concavely curved outer troughs (20, 21) are provided in the outer surfaces (18, 19) of the tabs (7, 8), the said outer troughs, starting from the abutment section (3), becoming wider and deeper in the direction of the transverse holes (10, 11), and **in that** the transverse holes (10, 11) open into end-side, ring-like depressions (22, 23) of the tabs (7, 8) for receiving closing discs (24, 25).

2. Fork head according to Claim 1, **characterized in that** the closing discs (24, 25) end flush with the outer contour of a tab (7, 8).

3. Fork head according to Claim 1 or 2, **characterized in that** the closing discs (24, 25) can be fixed by a securing element (26, 27).

4. Fork head according to Claim 3, **characterized in that** the securing elements (26, 27) are formed by countersunk head screws and are screwed into end-side threaded bores (28) in the bolt (12).

5. Fork head according one of Claims 1 to 4, **characterized in that** an internal screw thread (4), for receiving an end section (6), provided with an external screw thread (5), of a tensile element (2) is formed in the abutment section (3).

6. Fork head according to one of Claims 1 to 5, **characterized in that** inner depressions (30) are provided on the inner sides (29) of the tabs (7, 8).

## Revendications

1. Chape qui présente un tronçon de butée (3) pour le raccordement d'un élément de traction ou tirant (2) sous la forme d'une tige ou d'un câble, tandis que dans le prolongement du tronçon de butée (3) sont prévues deux attaches parallèles (7, 8), entre lesquelles est formée une fente d'introduction (9), et les attaches sont traversées par des alésages transversaux (10, 11) en alignement pour recevoir un boulon (12), tandis que les surfaces frontales (14, 15) des attaches (7, 8) détournées du tronçon de butée (3) sont courbées pour former des tronçons sphériques, **caractérisée en ce que** dans les faces extérieures (18, 19) des attaches (7, 8), sont prévues des dépressions extérieures (20, 21) dirigées longitudinalement et courbées de façon concave, dépressions externes qui s'élargissent en partant du tronçon de butée (3) en direction des alésages transversaux (10, 11) et vont en s'approfondissant, et **en ce que** les alésages transversaux (10, 11) débouchent dans les évidements frontaux annulaires (22, 23) des attaches (7, 8) pour recevoir des rondelles d'étanchéité (24, 25).

2. Chape selon la revendication 1, **caractérisée en ce que** les rondelles d'étanchéité (24, 25) sont obturées en affleurement avec le contour extérieur d'une attache (7, 8).

3. Chape selon la revendication 1 ou 2, **caractérisée en ce que** les rondelles d'étanchéité (24, 25) peuvent être fixées par un élément de sûreté (26, 27).

4. Chape selon la revendication 3, **caractérisée en ce que** les éléments de sûreté (26, 27) sont formés par des vis à tête fraisée et sont introduits par torsion dans des alésages filetés frontaux (28) des boulons (12).

5. Chape selon l'une des revendications 1 à 4, **caractérisée en ce que** dans le tronçon de butée (3), est formé un filetage interne (4) pour recevoir un tronçon d'extrémité (6) muni d'un filetage externe (5) d'un élément de traction ou tirant (2).

6. Chape selon l'une des revendications 1 à 5, **caractérisée en ce que** sur les côtés internes (29) des attaches (7, 8), sont prévues des dépressions internes (30).
